(19) Europäisches Patentamt
European Patent Office
Office européen des brevets

(11) EP 0 541 912 B1

(12) EUROPEAN PATENT SPECIFICATION

(45) Date of publication and mention of the grant of the patent: **21.07.1999 Bulletin 1999/29**

(51) Int Cl.[6]: **C09K 19/54**, C09K 19/30, G02F 1/1333

(21) Application number: **92114191.7**

(22) Date of filing: **20.08.1992**

# (54) Electrooptical system

Elektrooptisches System

Système électro-optique

(84) Designated Contracting States:
**DE FR GB NL**

(30) Priority: **13.09.1991 EP 91115517**

(43) Date of publication of application:
**19.05.1993 Bulletin 1993/20**

(73) Proprietors:
- **SHARP CORPORATION**
  **Osaka 545 (JP)**
- **MERCK PATENT GmbH**
  **64271 Darmstadt (DE)**

(72) Inventors:
- **Jubb, Raymond**
  **W-6100 Darmstadt (DE)**
- **Finkenzeller, Ulrich**
  **W-6831 Plankstadt (DE)**
- **Wilhelm, Stefan**
  **W-6148 Heppenheim (DE)**
- **Naemura, Shohei**
  **Yokohama-shi, Kanagawa Pref. (JP)**
- **Hirai, Toshiyuki**
  **Tenri-shi, Nara Pref. (JP)**
- **Kouzaki, Shuichi**
  **Nara-shi, Nara Pref. (JP)**

(74) Representative: **Schüttler, Reinhard, Dr.**
**Merck Patent GmbH,**
**Postfach**
**64271 Darmstadt (DE)**

(56) References cited:
**EP-A- 0 156 615**
**EP-A- 0 359 146**
**WO-A-91/05029**
**WO-A-92/04421**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 541 912 B1

## Description

The invention relates to an electrooptical system

- which between 2 electrode layers contains a liquid crystal mixture and a further optically transparent polymer medium, in which one of the electrode layers is in the form of an active matrix having nonlinear addressing elements integrated with the image point, while the other electrode layer forms the counter electrode,
- whose liquid crystal molecules have irregular orientation in the switched-off state,
- in which one of the refractive indices of the liquid crystal mixture is substantially the same as the refractive index of the medium $n_m$ and/or in which the quotient from the weight of the liquid crystal mixture and the weight of the optically transparent medium is 1.5 or more, and
- which in one of the two switching states has reduced transmission compared with the other state independently of the polarisation of the incident light.

The optically transparent medium can contain liquid crystal microdroplets delimited from one another or a sponge-like three-dimensional network in whose pores, the transition from pore to pore being more or less continuous, the liquid crystal is present. The expression liquid crystal microdroplets denotes small liquid crystal compartments delimited from one another, which, however, need not be spherical at all but can have an irregular shape and/or be deformed.

If the optically transparent medium contains liquid crystal microdroplets, it is hereinafter called a microdroplet system; if, on the other hand, a sponge-like three-dimensionally crosslinked structure is present, the medium is characterised by the expression network.

NCAP and PDLC films (NCAP = nematic curvilinear aligned phases, PDLC = polymer dispersed liquid crystal) are examples of microdroplet systems. Examples of arrangements of this type are described in US 4,435,047, EP 0,272,582, US 4,688,900, US 4,671,611 and Mol. Cryst. Liq. Cryst. Inc. Nonlin. Optics 157 (1988) 427. In contrast, the arrangement described in EP 0,313,053 is a network or PN system (PN = polymer network) in which the optically transparent medium has a sponge-like network structure.

The nonlinear elements used for preparing the active matrix can have 2 or 3 connections. Examples of elements having 2 connections are α-Si:H diodes (N. Szydlo et al., Proc. 3rd Int. Display Res. Conf., Kobe; SID Los Angeles, 1983, p. 416), NINα-Si: H diodes (Z. Yaniv et al., Conf. Rec. 1985 Intern. Display Research Conference, IEEE, New York, 1985, 76), α-Si:H ring diodes (S. Togashi et al., Proceedings of the 4th International Display Research Conference, SEE, Paris, 1984, p. 141), MIM or MSI diodes (metal-insulator-metal, metal-silicon nitrideindium tin oxide; D.R. Baraff et al., Digest SID International Symposium, Los Angeles, 1980, p. 200; M. Suzuki et al., Proceedings of the 6th International Display Research Conference, Japan Display '86, 1986, p. 72) or ZnO varistores (D.E. Castleberry et al., SID '82 Digest, 1982, p. 246). The nonlinear elements having 3 connections are thin film transistors (TFT), of which several types are discussed and which differ in the semiconductor material used (for example α-Si:H, p-Si, CdSe, Te and other materials; see, for example, P.M. Knoll, Displays, Heidelberg 1986, p. 216; T. Nishimura, Mat. Res. Soc. Symp. Proc. 33 (1984) 221; C.S. Bak et al., Mat. Res. Soc. Symp. Proc. 33 (1984) 215; W.G. Hawkins et al., Mat. Res. Soc. Symp. Proc. 33 (1984) 231; M. Matsuura et al., SID 1983 Symposium Digest, 1983, p. 148).

When nonlinear elements having 3 connections are used, only one connection is usually required for the counter electrode, while in the case of active matrix addressings, which are based on elements having 2 connections, the counter electrode is usually also scanned. However, active matrix addressings based on elements having 2 connections and in which only one electrode is scanned have also been proposed (Y. Baron et al., Proceedings of the 6th International Research Conference 1986, Japan Display '86, p. 86), and furthermore the use of TFTs as an element having only 2 connections has also been discussed (C. Hilsum et al., Displays, January 1986, P-37).

More details on the addressing of liquid crystal displays by an active matrix of nonlinear elements can be found, for example, in A.H. Firester, SID, 1987, Society for Information Display Seminar, Seminar 5: Active Matrices for Liquid Crystals, E. Kaneko, Liquid Crystal Displays, KTK Scientific Publishers, Tokyo, Japan, 1987, chapter 6 and 7 or P.M. Knoll, Displays, Heidelberg, 1986, p. 216ff.

No polarisers are required for operating microdroplet or network systems, as a result of which these systems have high transmission. Microdroplet or network systems provided with active matrix addressing have been proposed on the basis of these favourable transmission properties in particular for projection applications, but in addition also for displays having high information content and for further applications.

The liquid crystal mixtures used for producing the microdroplet or network systems have to meet a wide range of demands. Thus, in microdroplet systems, one of the refractive indices of the liquid crystal is selected such that it more or less coincides with the refractive index of the medium $n_M$. In network systems, the refractive index does not necessarily have to be adjusted, due to the usually much higher liquid crystal content of the light-modulating layer, although it may be done in order to increase the light throughput and the contrast.

The liquid crystal mixture can be dielectrically positive or dielectrically negative. The use of dielectrically positive liquid crystal mixtures is preferred, in which case the ordinary refractive index no is in general adjusted to the refractive index of the matrix $n_M$. Other adjustments have been described in the literature (see, for example, EP 0,272,585) or can be easily indicated by one skilled in the art.

The adjustment of the refractive indices achieves the result that incident light in the addressed state sees virtually no difference in refractive index between the aligned liquid crystal molecules and the medium and the arrangement appears transparent. Furthermore, the liquid crystals should have a high clearing point, a broad nematic range, no smectic phases down to low temperatures and high stability and be distinguished by an optical anisotropy $\Delta n$ and a flow viscosity $\eta$ which can be optimised with respect to the particular application and by a high dielectric anisotropy $\Delta\varepsilon$.

A series of materials and processes have hitherto been proposed for producing the matrix or the network. Thus, for example, NCAP films are obtained according to the process described in US 4,435,047 by intimately mixing the encapsulating polymer material, such as, for example, polyvinyl alcohol, the liquid crystal mixture and a support material, such as, for example, water, in a colloid mill. The support material is then removed, for example by drying. In contrast, in the PIPS process (polymerisation induced phase separation) described in Mol. Cryst. Liq. Cryst. Inc. Nonlin. Optics 157 (1988), 427 and in the process described in EP 0,272,585, the liquid crystal mixture is first mixed with monomers or oligomers of the film-forming polymer before starting the polymerisation. The microdroplet system described in Mol. Cryst. Liq. Cryst. Inc. Nonlin. Opt. 157 (1988), 427 is based on an epoxy film, while the arrangement described in EP 0,272,585 is an acrylate system.

When the microdroplet or network system is addressed by means of an active matrix, a further farreaching criterion is added to the requirements listed so far which must be fulfilled by the liquid crystal mixture, the monomers and prepolymers and the cured polymer. This is related to the fact that each image point represents a capacitive load with respect to the particular active nonlinear element, which is charged at the rhythm of the addressing cycle. In this cycle, it is of paramount importance that the voltage applied to an addressed image point drops only slightly until the image point is again charged in the next addressing cycle. A quantitative measure of the drop in voltage applied to an image point is the so-called holding ratio (HR) which is defined as the ratio of the drop in voltage across an image point in the non-addressed state and the voltage applied; a process for determining the HR is given, for example, in Rieger, B. et al., Conference Proceeding der Freiburger Arbeitstagung Flüssigkristalle (Freiburg Symposium on Liquid Crystals), Freiburg 1989. Electrooptical systems having a low or relatively low HR show insufficient contrast.

It is true that considerable efforts have already been undertaken hitherto in order to optimise microdroplet and network systems with respect to the liquid crystal mixture used and the polymer system. On the other hand, however, only few investigations of electrooptical systems based on microdroplet or network systems and having active matrix addressing can be found in the literature, and no concepts have so far been proposed for providing electrooptical systems having a high HR. The previously mentioned systems fulfil the requirements for favourable properties of the liquid crystal mixture, monomers or oligomers and the cured polymer used in combination with a high HR of the entire system only unsatisfactorily.

A further serious problem is often that the liquid crystal mixture has insufficient miscibility with the monomers, oligomers and/or prepolymers of the polymer used for forming the matrix or the network, which significantly impairs the production of PN systems and considerably limits in particular the use of PIPS technology in microdroplet matrix systems.

A further disadvantage is in particular that the liquid crystal mixture or individual components of the liquid crystal mixture are in many cases distinguished by an excessively high and/or significantly temperature-dependent solubility in the cured, matrix- or network-forming polymer. If, for example, the solubility or the temperature-dependence of the solubility of one or several components differs quite significantly from that of the remaining components, it may happen that the physical properties of the mixture and in particular also of the refractive indices $n_e$ and $n_o$ are substantially affected, which disturbs the adjustment of $n_o$ or $n_e$ or of another refractive index of the liquid crystal mixture to $n_M$, thus resulting in deterioration of the optical properties of the system. The "bleeding" described in EP 0,357,234, according to which at least some of the liquid crystal droplets have the tendency, when the matrix film is subjected to mechanical stress, to dissolve with diffusion of the liquid crystal to the film surface or into the matrix, is favoured by a high solubility of the liquid crystal mixture in the cured polymer.

Consequently, there is a high demand for electrooptical systems which fulfil to a large extent the requirements described and which have in particular a high HR and are distinguished by good miscibility of the particular liquid crystal mixture with the monomers, oligomers and/or prepolymers of the polymer used and by low solubility of the liquid crystal mixture in the cured polymer.

The object of the invention was to provide electrooptical systems of this type and mixtures for producing systems of this type containing monomers, oligomers and/or prepolymers of the polymer used and a liquid crystal mixture.

It has been found that this object can be achieved if the liquid crystal mixture contains one or more compounds of the formula I2:

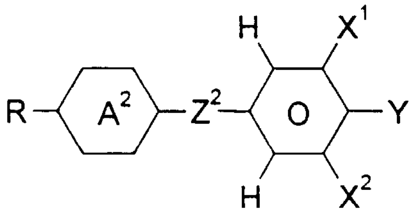

I2

wherein

R is alkyl or alkoxy having 1-10, C atoms, or n-alkoxyalkyl,

$Z^2$ is $-CH_2CH_2-$, -COO- or a single bond,

Y is -F or -Cl and

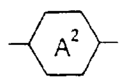

is Cyc, Phe.(F), Phe.3F5F, Phe.2F3F, Pyr, Pyd or Dio

and contains one or more trinuclear compounds of the formula I3:

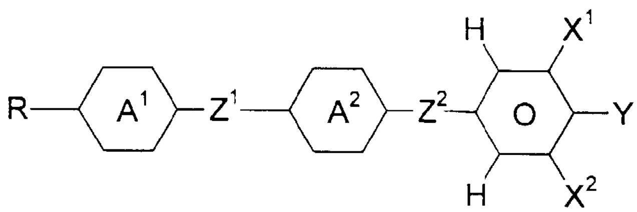

I3

wherein

R is n-alkyl or n-alkoxy having 1-10 C atoms, n-alkoxymethyl or n-alkoxyethyl having 1-8 C atoms or n-alkenyl having up to 7 C atoms,

$Z^1$ and $Z^2$, independently of one another, $-CH_2CH_2-$, -COO- or a single bond,

Y is $-OCHF_2$ or $-OCF_3$,

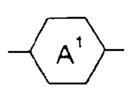 and 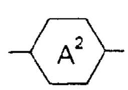

are, independently of one another, Cyc, Phe.(F), Phe.2F3F, Phe.3F5F, Phe.2F3F5F, Pyr, Pyd and Dio,

and the liquid crystal mixture contains at most 15 % of nitrile compounds and
and the monomers, oligomers and/or prepolymers forming the precursor of the optically transparent polymer medium are selected such that the absolute value of the difference between the solubility parameter of the precursor and the solubility parameter of the liquid crystal mixture does not exceed 1.5 at room temperature
with the proviso that the precursor of the optically transparent polymer medium is not polymerised by cationic photopolymerisation.

Accordingly, the invention relates to an electrooptical system

- which between 2 electrode layers contains a liquid crystal mixture and a further optically transparent polymer medium, in which one of the electrode layers is in the form of an active matrix having nonlinear addressing elements integrated with the image point, while the other electrode layer forms the counter electrode,
- whose liquid crystal molecules have irregular orientation in the switched-of state,
- in which one of the refractive indices of the liquid crystal mixture is substantially the same as the refractive index of the medium $n_m$ and/or in which the quotient from the weight of the liquid crystal mixture and the weight of the optically transparent medium is 1.5 or more,
- which in one of the two switching states has reduced transmission compared with the other state independent of the polarisation of the incident light,

characterized in that

- the liquid crystal mixture contains one or more binuclear compounds of the formula I2:

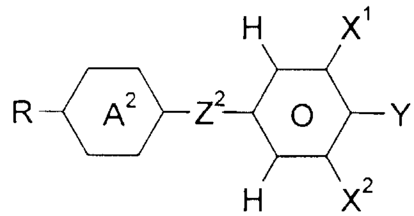

I2

wherein

R is alkyl or alkoxy having 1-10, C atoms, or n-alkoxyalkyl,

$Z^2$ is $-CH_2CH_2-$, -COO- or a single bond,

Y is -F or -Cl and

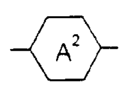

is Cyc, Phe.(F), Phe.3F5F, Phe.2F3F, Pyr, Pyd or Dio

and contains one or more trinuclear compounds of the formula I3:

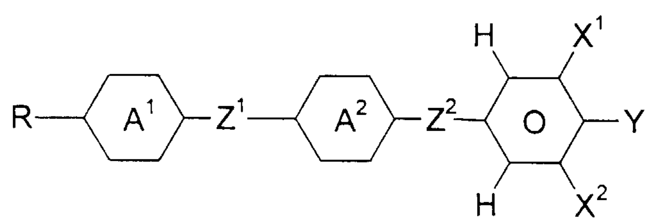

I3

wherein

R is n-alkyl or n-alkoxy having 1-10 C atoms, n-alkoxymethyl or n-alkoxyethyl having 1-8 C atoms or n-alkenyl having up to 7 C atoms,

$Z^1$ and $Z^2$, independently of one another, $-CH_2CH_2-$, -COO- or a single bond,

Y is $-OCHF_2$ or $-OCF_3$,

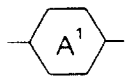 and 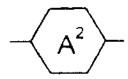

are, independently of one another, Cyc, Phe.(F), Phe.2F3F, Phe.3F5F, Phe.2F3F5F, Pyr, Pyd and Dio,

- in that the liquid crystal mixture contains at most 15 % of nitrile compounds and
- in that the monomers, oligomers and/or prepolymers forming the precursor of the optically transparent polymer medium are selected such that the absolute value of the difference between the solubility parameter of the precursor and the solubility parameter of the liquid crystal mixture does not exceed 1.5 at room temperature

with the proviso that the precursor of the optically transparent polymer medium is not polymerised by cationic photopolymerisation.

For the sake of simplicity, Phe is 1,4-phenylene, Phe.2F is 2-fluoro-1,4-phenylene, Phe.3F is 3-fluoro-1,4-phenylene, Cyc is trans-1,4-cyclohexane, Pyr is pyrimidine-2,5-diyl and Pyd is pyridine-2,5-diyl, the two abbreviations Pyr and Pyd comprising in each case the two possible positional isomers. Furthermore, Phe.(F) is intended to designate a 1,4-phenylene group which may be unsubstituted or monosubstituted by fluorine in the 2 or 3 position. Phe.2F3F and Phe.3F5F are a 1,4-phenylene group which is difluorinated in the 2 and 3 or 3 and 5 position respectively.

Electrooptical systems whose liquid crystal mixture contains one or more binuclear compounds of the formula I2 are preferred:

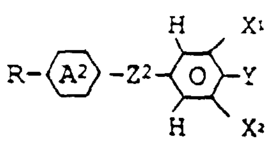

I2

In the compounds of the formula I2, R is preferably alkyl or alkoxy having 1-10, but in particular 1-8, C atoms, the straight-chain radicals being preferred. Furthermore, n-alkoxyalkyl compounds and in particular n-alkoxymethyl and n-alkoxyethyl compounds are preferred.

$Z^2$ is preferably $-CH_2CH_2-$, -COO- or a single bond, in particular a single bond or $-CH_2CH_2-$ and very particularly a single bond. Y is -F, -Cl, $-OCHF_2$, $-OCF_3$ or $-CF_3$ and in particular -F or -Cl.

Compounds of the formula I2 in which at least one of $X^1$ and $X^2$ is different from H are particularly preferred.

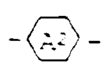

is preferably Cyc, Phe.(F), Phe.3F5F, Phe.2F3F, Pyr, Pyd or Dio and in particular Cyc, Phe.(F), Phe.3F5F, Phe.2F3F, Pyr or Pyd.

Furthermore, electrooptical systems whose liquid crystal mixture contains one or more trinuclear compounds of the formula I3 are preferred:

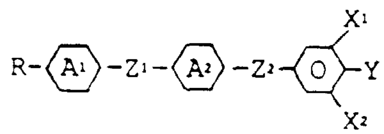

I3

In the compounds of the formula I3, R is preferably n-alkyl or n-alkoxy having 1-10 C atoms, furthermore also n-alkoxymethyl or n-alkoxyethyl having 1-8 C atoms and n-alkenyl having up to 7 C atoms.

Very particular preference is given to compounds of the formulae I3 in which R is methyl, ethyl, propyl, butyl, pentyl, hexyl, heptyl, octyl, nonyl, decyl, methoxy, ethoxy, propoxy, butoxy, pentoxy, hexoxy, heptoxy, octoxy, methoxymethyl, ethoxymethyl, propoxymethyl, butoxymethyl, methoxyethyl, ethoxyethyl or propoxyethyl. $Z^1$ and $Z^2$ in the compounds of the formulae I3 are, independently of one another, preferably $-CH_2Ch_2-$, -COO- or a single bond and in particular $-CH_2CH_2-$ or a single bond. Particular preference is given to those compounds of the formula I3 in which at least one of $Z^1$ or $Z^2$ is a single bond. Y is -F, -Cl, $-OCHF_2$, $-OCF_3$ or $-CF_3$ and in particular -F, -Cl, $-OCHF_2$ and $-OCF_3$.

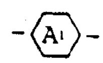

and

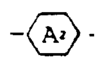

are, independently of one another, Cyc, Phe.(F), Phe.2F3F, Phe.3F5F, Phe.2F3F5F, Pyr, Pyd and Dio and in particular Cyc, Phe.(F), Phe.2F3F, Phe.3F5F, Phe.2F3F5F, Pyr and Pyd.

Furthermore, electrooptical systems whose liquid crystal mixture contains one or more tetranuclear compounds of the formula I4 are preferred:

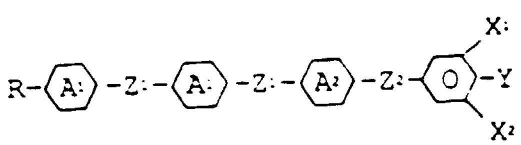

I4

In the compounds of the formula I4, R is preferably n-alkyl or n-alkoxy having 1-10 C atoms, furthermore also n-alkoxymethyl or n-alkoxyethyl having 1-8 C atoms.

Very particular preference is given to compounds of the formulae I4 in which R is methyl, ethyl, propyl, butyl, pentyl, hexyl, heptyl, octyl, nonyl, decyl, methoxy, ethoxy, propoxy, butoxy, pentoxy, hexoxy, heptoxy or octoxy.

In the compounds of the formula I4, preferably not more than 2 and in particular only one of the bridges $Z^1$ and $Z^2$ are different from a single bond.

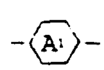

and

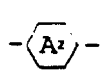

are preferably, independently of one another, Cyc, Phe.2F, Phe.3F, Phe, Pyr or Pyd. Compounds of the formula I4 in which at least one of

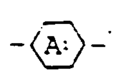 and 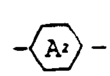

is Phe.2F or Phe.3F are preferred. The weight proportion of the compounds of the formulae I4 in the liquid crystal mixture of the electrooptical systems according to the invention is preferably not too high and is in particular less than 20 %, the use of laterally fluorinated compounds of the formula I4 being in many cases preferred.

It has been found that electrooptical systems

- whose liquid crystal mixture contains one or more compounds of the formulae I2, I3 or I4 and
- whose transparent polymer medium is obtained by polymerisation of a precursor, in which the liquid crystal mixture and the precursor are matched to one another such that the absolute value of the difference between the solubility parameter of the liquid crystal mixture and the solubility parameter of the precursor does not exceed 1.5 at room temperature

have particularly favourable properties.

These systems are distinguished by advantageous values for the threshold voltage, a high UV and temperature stability, by a favourable operating temperature range, by favourable values for the temperature-dependence of the electrooptical parameters, by a high contrast and in particular by a high HR.

The solubility parameter $\delta$ for nonpolar or weakly polar organic compounds such as is the case with liquid crystal compounds or mixtures and monomers, oligomers and/or prepolymers is given, according to the Hildebrand equation, by

$$\delta = \left(\frac{D\,(\Delta H_v\text{-}RT)}{M}\right)^{1/2}$$

in which

D is the density,
$\Delta H_v$ the enthalpy of evaporation,
T the absolute temperature in K,
M the molecular weight of the compounds and
R the gas constant.
$\delta$ is usually given in $(cal/cm^3)^{1/2}$, this unit also being designated as Hildebrand H.

If $\Delta H_v$ values are not available or - as is the case, for example, for polymer materials - it is virtually impossible to measure them, $\delta$ can also be estimated from the molar attraction constants given by Small. A list of Small's constants can be found, for example, in R.F. Fedors, Polymer Engineering and Science, 14 (1974) 147, where further procedures for estimating $\delta$ are also given. The solubility parameters estimated by the different methods do not differ very greatly in many cases and can in general be used side by side. In doubtful cases, the $\delta$ values calculated by the method developed by Fedors (see loc. cit.) should be used.

For the liquid crystal compounds used in the liquid crystal mixture LC-I below, solubility parameters between 8.94 and 9.64 were obtained by the method developed by Fedors (see loc. cit.).

| Compound | Weight proportion [%] | Solubility parameter (H) |
|---|---|---|
| $H_{11}C_5$-Cyc-Phe-F | 12.0 | 9.24 |
| $H_{13}C_6$-Cyc-Phe-F | 10.0 | 9.20 |
| $H_{15}C_7$-Cyc-Phe-F | 10.0 | 9.17 |
| $H_7C_3$-Cyc-Phe.2F-Phe-Cyc-$C_3H_7$ | 3.0 | 9.64 |
| $H_{11}C_5$-Cyc-Phe.2F-Phe-Cyc-$C_3H_7$ | 4.0 | 9.57 |
| $H_{11}C_5$-Cyc-Phe.2F-Phe-Cyc-$C_5H_{11}$ | 3.0 | 8.94 |
| $H_7C_3$-Cyc-Cyc-Phe-$OCF_3$ | 13.0 | 9.13 |
| $H_{11}C_5$-Cyc-Cyc-Phe-$OCF_3$ | 12.0 | 9.08 |
| $H_7C_3$-Cyc-Cyc-$CH_2CH_2$-Phe.3F-F | 13.0 | 9.41 |
| $H_7C_3$-Cyc-Cyc-$CH_2CH_2$-Phe-$OCF_3$ | 11.0 | 9.08 |
| $H_{11}C_5$-Cyc-Cyc-$CH_2CH_2$-Phe-$OCF_3$ | 8.0 | 9.04 |

Taking into account the weight proportions of the individual compounds, an average value of $\delta$ = 9.20 H is obtained for the liquid crystal mixture.

This liquid crystal mixture was combined in various experiments with the following commercially available monomers in order to produce the corresponding precursor:

| Exper. No. | Monomer: Formula | Monomer: Name | Solubility parameter of the monomer [H] | $\Delta = \lvert \delta_{LC} - \delta_M \rvert$ |
|---|---|---|---|---|
| 1 | 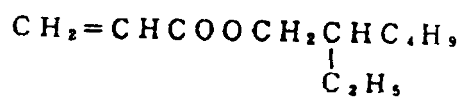 | 2 EHA | 8.77 | 0.43 |
| 2 | 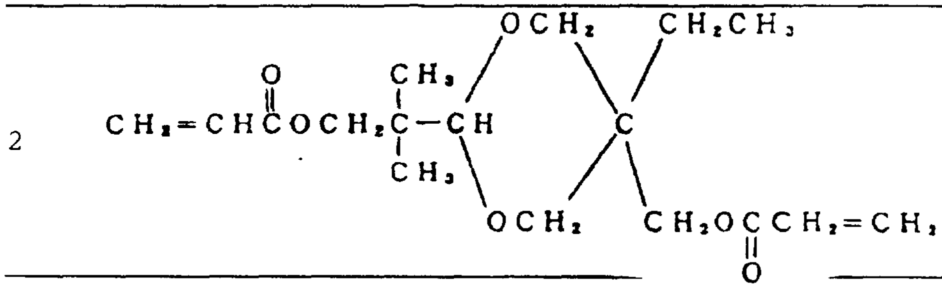 | R-604 | 9.65 | 0.45 |
| 3 | 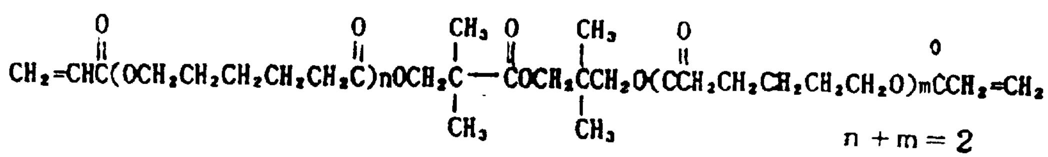 n + m = 2 | HX-220 | 9.95 | 0.75 |

| Exper. No. | Monomer Formula | Name | Solubility parameter of the monomer [H] | $\Delta = \lvert\delta_{LC}-\delta_M\rvert$ |
|---|---|---|---|---|
| 4 | 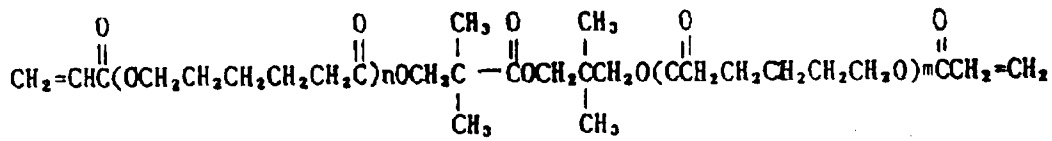 n + m = 4 | HX-620 | 10.02 | 0.82 |
| 5 | 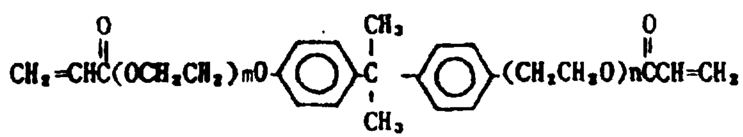 n + m = 4 | R-551 | 10.033 | 1.13 |

| Exper. No. | Monomer: Formula | Monomer: Name | Solubility parameter of the monomer [H] | $\Delta = \lvert \delta_{LC} - \delta_M \rvert$ |
|---|---|---|---|---|
| 6 | 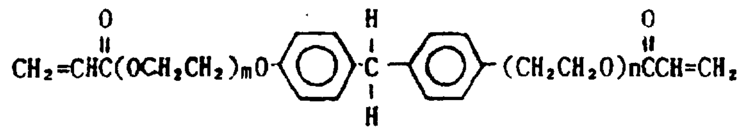 n + m = 4 | R-172 | 10.58 | 1.38 |
| 7 | 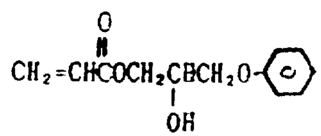 | R-128 | 12.10 | 2.90 |
| 8 | $CH_2=CHCOOCH_2CH_2OH$ | HOA | 13.91 | 4.71 |

In Figure 1, the mixing temperature $T_M$ at which a homogenous mixture of the liquid crystal mixture LC-I with the particular monomer (mixing ration in each case 1:1) is obtained has been plotted against the solubility parameter $\delta_M$ of the monomer calculated by the method developed by Fedors. The dashed line marks the solubility parameter $\delta_{LC\text{-}I}$ of the liquid crystal mixture LC-I. It can be seen from Figure 1 the mixing temperatures of less than 100 °C are observed for the monomers 2 EHA, R 604, HX 220 and HX 620 and the liquid crystal mixture LC-I, while LC-I is virtually immiscible with R 551, R 712, R 128 and HOA.

In extensive further investigations, it was found that the absolute value of the difference between the solubility parameter of the liquid crystal mixture used according to the invention and the solubility parameter of the precursor for achieving sufficient miscibility of liquid crystal mixture and precursor is less than 1.5 and in particular does not exceed 1.0.

The teaching according to the invention for the first time provides a quantitative criterion as to how the precursor, given a certain liquid crystal mixture, should be selected to ensure sufficient miscibility of liquid crystal mixture and monomers, oligomers and/or prepolymers. The present invention which makes a specific selection of suitable monomers, oligomers and/or prepolymers from the large pool of commercially available and/or synthesisable polymerisable components possible, is thus of significant commercial importance.

In Figure 2, the holding ratio HR (in per cent) for the abovementioned monomers is plotted against the solubility parameter $\delta_M$ calculated by the method of Fedors. It can be seen from Figure 2 that 2 EHA is distinguished by a very good value and HX 220 and HX 620 by a good value for the HR, while R 604, R 551 and R 712 have substantially lower values for the HR.

In extensive investigations, it was found that electrooptical systems

- whose liquid crystal mixture contains at least one compound of the formula I,
- for which the absolute value of the difference between the solubility parameter of the liquid crystal mixture and the solubility parameter of the monomers, oligomers and/or prepolymers is at most 1.5 and
- whose monomers, oligomers and/or prepolymers have a value of at least 50 %, in particular of more than 60 % and very particularly of more than 75 % for the holding ratio are distinguished by favourable properties and can be readily prepared in particular by the PIPS process and have a high HR.

This finding, which has far-reaching practical implications for the optimisation of systems according to the preamble of Claim 1, is surprising, since ultimately the HR value of the cured system is the determining factor and a good or very good HR value of the liquid crystal mixture and monomers, oligomers and/or prepolymers does not necessarily lead to the conclusion that the cured system also has a high HR value.

In order to prepare the systems according to the invention, monomers, oligomers and/or prepolymers having a wide range of polymerisable groups, such as, for example, substituted or unsubstituted vinyl groups $\rangle C=C \langle$ unsubstituted or substituted acryloyloxy groups

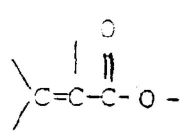

or substituted or unsubstituted epoxy groups

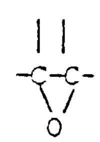

can be used.

In many cases preference is given to olefinically unsaturated monomers, oligomers and/or prepolymers which can be initiated by free radicals, or mixtures of oligomers and/or prepolymers with unsaturated monomers.

Below, suitable olefinically unsaturated classes of compounds are listed, which, however, are to be understood as examples and are intended merely for illustrating the invention and not limiting it: vinyl chlorides, vinylidene chlorides,

acrylonitriles, methacrylonitriles, acrylamides, methacrylamides, methylacrylates or methacrylates, ethylacrylates or methacrylates, n- or tert.-butylacrylates or methacrylates, cyclohexylacrylates or methacrylates, 2-ethylhexylacrylates or methacrylates, benzylacrylates or methacrylates, phenyloxyethylacrylates or methacrylates, hydroxyethylacrylates or methacrylates, hydroxypropylacrylates or methacrylates, lower alkoxyethylacrylates or methacrylates, tetrahydrofurfuryl acrylates or methacrylates, vinyl acetates, vinyl propionates, vinyl acrylates, vinyl succinates, N-vinylpyrrolidones, N-vinylcarbazoles, styrenes, divinylbenzenes, ethylene diacrylates, 1,6-hexanediol diacrylates, bisphenol A diacrylates and dimethacrylates, trimethylolpropane diacrylates, pentaerythritol triacrylates, triethylene glycol diacrylates, ethylene glycol dimethacrylates, tripropylene glycol triacrylates, pentaerythritol triacrylates, pentaerythritol tetraacrylates, ditrimethylpropane tetraacrylates and dipentaerythritol pentaacrylates or hexaacrylates.

Further suitable olefinically unsaturated precursors are listed, for example, in EP 0,272,585 and EP 0,313,053.

Of these, those monomers, oligomers and/or prepolymers are preferred whose curing leads to polymers whose solubility parameter $\delta_P$ is smaller by at least 3 than the solubility parameter of the liquid crystal mixture

$$\delta_{LC}-\delta_P \geq 3;$$

this difference is in particular greater than 3.5 and very particularly at least 4.

Furthermore, it was found that electrooptical systems for which the difference between the solubility parameter of the polymerisation initiator and the solubility parameter of the liquid crystal mixture

$$\delta_{PI}-\delta_{LC} \geq 2.0$$

and is in particular at least 2.5 are preferred.

In the table below, a few free radical photoinitiators are summarised together with their $\delta$ values calculated according to Fedors by way of example, which can be used advantageously, for example when using the abovementioned mixing example LC-I:

| Free radical photoinitiator | Solubility parameter [H] |
|---|---|
| 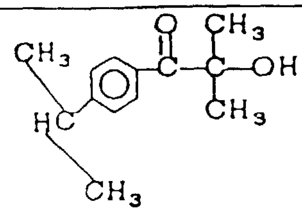 | 11.46 |
| 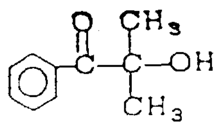 | 12.39 |
| 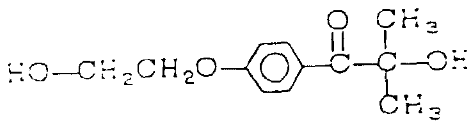 | 13.99 |
| 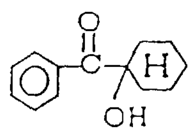 | 12.24 |

Depending on the nature of the polymerisable groups, the polymerisation can proceed by different mechanisms, free radical photopolymerisation and cationic photopolymerisation processes being preferred. The selection of the initiators should be guided by the abovementioned solubility criterion but is otherwise less critical.

The mixture composed of the precursor, the liquid crystal mixture and the polymerisation initiator can, if desired, contain further additives, such as, for example, antioxidants, light stabilisers, if desired, crosslinking agents for increasing the degree of crosslinking, and the like. These additives should have the highest possible resistivity and be purified correspondingly. Since additives of this type are often only added in small or very small concentrations which are significantly lower than the initiator concentration, it is sometimes also possible to tolerate a relatively low value for the resistivity without a too strong decrease in the HR of the electrooptical system; this is the case in particular if the concentration of the addivities, relative to the weight of the entire system, is less than 1.0 % and in particular less than 0.5 %.

The liquid crystal mixtures used in the electrooptical systems according to the invention can also contain, in addition to compounds of the formula I, nitrile compounds to the formulae II-V

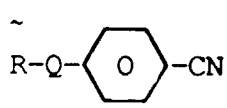

II

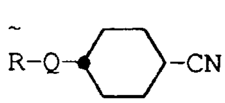

III

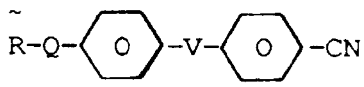

IV

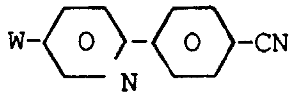

V

in which

R̃ is in each case, independently of one another, an alkyl group having 1-15 C atoms, in which one to two non-adjacent CH2 groups can also be replaced by -O-, -CO- and/or -CH=CH-,

V is a single bond, -COO- or -OOC-,

Q is

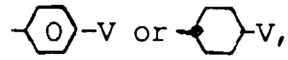

and

W is

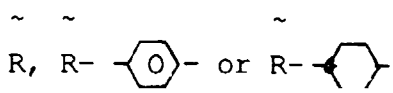

However, it has been shown that systems according to the invention whose liquid crystal mixture contains more than 15 % of nitrile compounds is often distinguished by an insufficient HR value.

The proportion of nitrile compounds, relative to the weight of the liquid crystal mixture, is preferably small and in particular not higher than 10 % and very particularly not higher than 7.5 %. Systems according to the invention whose liquid crystal mixtures do not contain any nitrile compounds are very particularly preferred.

The proportion of the compounds of the formula I in the liquid crystal mixtures used according to the invention is preferably not too small and is in particular more than 10 % and very particularly more than 20 %. Liquid crystal mixtures containing more than 40 % and in particular not less than 50 % of compounds of the formula I are particularly preferred.

The liquid crystal mixtures used according to the invention can contain further components which are preferably selected from nematic or nematogenic (monotropic or isotropic) substances, in particular substances from the groups comprising azoxybenzenes, benzylideneanilines, biphenyls, terphenyls, phenyl or cyclohexyl benzoates, phenyl or cyclohexyl cyclohexanecarboxylates, phenyl or cyclohexyl cyclohexylbenzoates, phenyl or cyclohexyl cyclohexylcyclohexanecarboxylates, cyclohexylphenyl benzoate, cyclohexylphenyl cyclohexanecarboxylate, or cyclohexylphenyl cyclohexylcyclohexanecarboxylate, phenylcyclohexanes, cyclohexylbiphenyls, phenylcyclohexylcyclohexanes, cyclohexylcyclohexanes, cyclohexylcyclohexenes, cyclohexylcyclohexylcyclohexenes, 1,4-bis(cyclohexyl)benzenes, 4,4'-bis(cyclohexyl)biphenyls, phenyl- or cyclohexylpyrimidines, phenyl- or cyclohexylpyridines, phenyl- or cyclohexyldioxanes, phenyl- or cyclohexyl-1,3-dithianes, 1,2-diphenylethanes, 1,2-dicyclohexylethanes, l-phenyl-2-cyclohexylethanes, 1-cyclohexyl-2-(4-phenylcyclohexyl)ethanes, 1-cyclohexyl-2-biphenylylethanes, l-phenyl-2-cyclohexylphenylethanes, halogenated or unhalogenated stilbenes, benzyl phenyl ethers, tolans and substituted cinnamic acids. The 1,4-phenylene groups in these compounds can also be fluorinated.

The liquid crystal mixtures used in the electrooptical systems according to the invention preferably also contain one or more dielectrically neutral compounds of the formulae 1-5:

R''-L-E-R''' 1

R''-L-COO-E-R''' 2

$$R''\text{-}L\text{-}OOC\text{-}E\text{-}R''' \qquad 3$$

$$R''\text{-}L\text{-}CH_2CH_2\text{-}E\text{-}R''' \qquad 4$$

$$R''\text{-}L\text{-}C{\equiv}C\text{-}E\text{-}R''' \qquad 5$$

In the formulae 1, 2, 3, 4 and 5, L and E, which may be identical or different, are each, independently of one another, a bivalent radical from the group comprising -Phe-, -Cyc-, -Phe-Phe-, -Phe-Cyc-, -Cyc-Cyc-, -Pyr-, -Dio-, -G-Phe- and -G-Cyc- and mirror images thereof, Phe being unsubstituted or fluorine-substituted 1,4-phenylene, Cyc being trans-1,4-cyclohexylene or 1,4-cyclohexenylene, Pyr being pyrimidine-2,5-diyl or pyridine-2,5-diyl, Dio being 1,3-dioxane-2,5-diyl and G being 2-(trans-1,4-cyclohexyl)ethyl, pyrimidine-2,5-diyl, pyridine-2,5-diyl or 1,3-dioxane-2,5-diyl.

One of the radicals L and E is preferably Cyc, Phe or Pyr. E is preferably Cyc, Phe or Phe-Cyc. The liquid crystals according to the invention preferably contain one or more components selected from compounds of the formulae 1, 2, 3, 4 and 5, in which L and E are selected from the group comprising Cyc, Phe and Pyr and simultaneously one or more components are selected from the compounds of the formulae 1, 2, 3, 4 and 5, in which one of the radicals L and E is selected from the group comprising Cyc, Phe and Pyr and the other radical is selected from the group comprising -Phe-Phe-, -Phe-Cyc-, -Cyc-Cyc-, -G-Phe- and -G-Cyc-, and, if desired, one or more components are selected from the compounds of the formulae 1, 2, 3, 4 and 5, in which the radicals L and E are selected from the group comprising -Phe-Cyc-, -Cyc-Cyc-, -G-Phe- and -G-Cyc-.

R'' and R'' in the compounds of the subformulae 1, 2, 3, 4 and 5 are each, independently of one another, preferably alkyl, alkenyl, alkoxy, alkenyloxy or alkanoyloxy having up to 8 carbon atoms. In most of these compounds, R''' and R' are different from one another, one of these radicals being in particular alkyl, alkoxy or alkenyl.

The weight proportion of the compounds of the formulae 1-5 in the liquid crystals used according to the invention is preferably 0-50 % and in particular 0-40 %.

The liquid crystal mixtures used in the electrooptical systems according to the invention preferably contain 1-98 %, in particular 5-95 %, of compounds of the formula I. The liquid crystals preferably contain 1-20, but in particular 1-15, and very particularly 1-12, compounds of the formula I.

One skilled in the art can select additives for the liquid crystal mixtures described from the large pool of nematic or nematogenic substances in such a manner that the birefringence Dn and/or the ordinary refractive index $n_o$ and/or other refractive indices and/or the viscosity and/or the dielectric anisotropy and/or further parameters of the liquid crystal are optimised with respect to the particular application.

The electrooptical systems according to the invention are distinguished by favourable values for the threshold voltage and the steepness of the electrooptical characteristic and a high UV and temperature stability, a high contrast and in particular by a high HR - even at elevated temperatures and on exposure to UV irradiation - a low solubility of the liquid crystal mixture in the polymer medium and a high long term stability.

The problems arising when addressing microdroplet or network systems by means of an active matrix are solved by the electrooptical system according to the invention in a more satisfactory manner than in previously described arrangements of this type. The invention provides for the first time a quantitative criterion which makes it possible to select substances from the large pool of precursor materials and photoinitiators, in addition to the existing, particularly suitable liquid crystal mixtures specifically containing at least one compound of the formula I in such a manner that optimised systems according to the preamble of Claim 1 are obtained.

The example which follows is intended to illustrate the invention without limiting it.

<u>Example 1</u>

The abovementioned liquid crystal mixture LC-I is stirred together with 2-EHA and Darocur 1173 in a weight ratio of 1.5 : 0.95 : 0.05 at room temperature until a clear solution is obtained. The solution is placed together with spacers (16 μm) between 2 transparent glass substrates provided with electrode layers, giving a uniform film having a thickness of 16 μm which is cured by UV irradiation (480 W UV lamp). One of the electrode layers is in the form of an active TFT matrix, while the other electrode constitutes the counter electrode. After curing, the system has an HR of 96.4.

## Claims

1. Electrooptical system

- which between 2 electrode layers contains a liquid crystal mixture and a further optically transparent polymer medium, in which one of the electrode layers is in the form of an active matrix having nonlinear addressing elements integrated with the image point, while the other electrode layer forms the counter electrode,
- whose liquid crystal molecules have irregular orientation in the switched-of state,
- in which one of the refractive indices of the liquid crystal mixture is substantially the same as the refractive index of the medium $n_m$ and/or in which the quotient from the weight of the liquid crystal mixture and the weight of the optically transparent medium is 1.5 or more,
- which in one of the two switching states has reduced transmission compared with the other state independent of the polarisation of the incident light,

characterized in that

- the liquid crystal mixture contains one or more binuclear compounds of the formula I2:

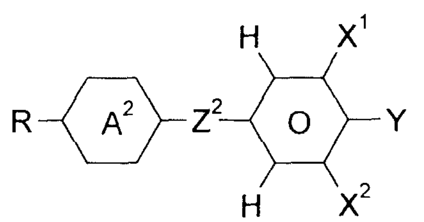

I2

wherein

R is alkyl or alkoxy having 1-10, C atoms, or n-alkoxyalkyl,

$Z^2$ is $-CH_2CH_2-$, -COO- or a single bond,

Y is -F or -Cl and

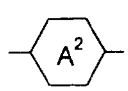

is Cyc, Phe.(F), Phe.3F5F, Phe.2F3F, Pyr, Pyd or Dio

and contains one or more trinuclear compounds of the formula I3:

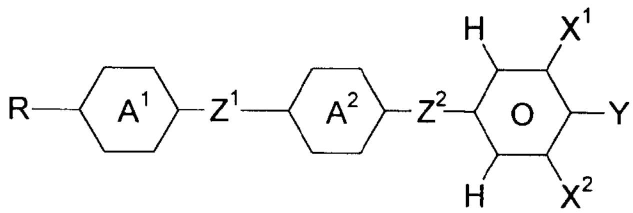 I3

wherein

R is n-alkyl or n-alkoxy having 1-10 C atoms, n-alkoxymethyl or n-alkoxyethyl having 1-8 C atoms or n-alkenyl having up to 7 C atoms,

$Z^1$ and $Z^2$, independently of one another, $-CH_2CH_2-$, -COO- or a single bond,

Y is $-OCHF_2$ or $-OCF_3$,

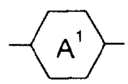 and 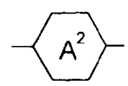

are, independently of one another, Cyc, Phe.(F), Phe.2F3F, Phe.3F5F, Phe.2F3F5F, Pyr, Pyd and Dio,

- in that the liquid crystal mixture contains at most 15 % of nitrile compounds and
- in that the monomers, oligomers and/or prepolymers forming the precursor of the optically transparent polymer medium are selected such that the absolute value of the difference between the solubility parameter of the precursor and the solubility parameter of the liquid crystal mixture does not exceed 1.5 at room temperature

with the proviso that the precursor of the optically transparent polymer medium is not polymerised by cationic photopolymerisation.

**2.** Electrooptical system according to claim 1, characterized in that the absolute value of the difference between the solubility parameter of the precursor and the solubility parameter of the liquid crystal mixture does not exceed 1.0.

**3.** Electrooptical system according to at least one of claims 1 and 2, characterized in that the liquid crystal mixture contains the following compounds

$H_{11}C_5$-Cyc-Phe-F,

$H_{13}C_6$-Cyc-Phe-F,

$H_{15}C_7$-Cyc-Phe-F,

$H_7C_3$-Cyc-Phe.2F-Phe-Cyc-$C_3H_7$,

$H_{11}C_5$-Cyc-Phe.2F-Phe-Cyc-$C_3H_7$,

$H_{11}C_5$-Cyc-Phe.2F-Phe-Cyc-$C_5H_{11}$,

$H_7C_3$-Cyc-Cyc-Phe-$OCF_3$,

$H_{11}C_5$-Cyc-Cyc-Phe-$OCF_3$,

$H_7C_3$-Cyc-Cyc-$CH_2CH_2$-Phe.3F-F,

$H_7C_3$-Cyc-Cyc-$CH_2CH_2$-Phe-$OCF_3$

and

$H_{11}C_5$-Cyc-Cyc-$CH_2CH_2$-Phe-$OCF_3$.

**4.** Electrooptical system according to claim 3, characterized in that the liquid crystal mixture contains the compounds in the weight proportions given in the following table

| Compound | Weight proportion (%) |
|---|---|
| $H_{11}C_5$-Cyc-Phe-F | 12.0 |
| $H_{13}C_6$-Cyc-Phe-F | 10.0 |
| $H_{15}C_7$-Cyc-Phe-F | 10.0 |
| $H_7C_3$-Cyc-Phe.2F-Phe-Cyc-$C_3H_7$ | 3.0 |
| $H_{11}C_5$-Cyc-Phe.2F-Phe-Cyc-$C_3H_7$ | 4.0 |
| $H_{11}C_5$-Cyc-Phe.2F-Phe-Cyc-$C_5H_{11}$ | 3.0 |
| $H_7C_3$-Cyc-Cyc-Phe-$OCF_3$ | 13.0 |
| $H_{11}C_5$-Cyc-Cyc-Phe-$OCF_3$ | 12.0 |
| $H_7C_3$-Cyc-Cyc-$CH_2CH_2$-Phe.3F-F | 13.0 |
| $H_7C_3$-Cyc-Cyc-$CH_2CH_2$-Phe-$OCF_3$ | 11.0 |
| $H_{11}C_5$-Cyc-Cyc-$CH_2CH_2$-Phe-$OCF_3$ | 8.0 |

**5.** Electrooptical system according to at least one of claims 3 and 4, characterized in that the precursor of the system comprises one of the following monomers 1 to 4

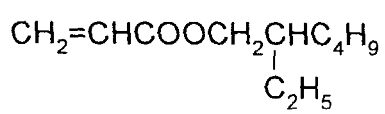

1

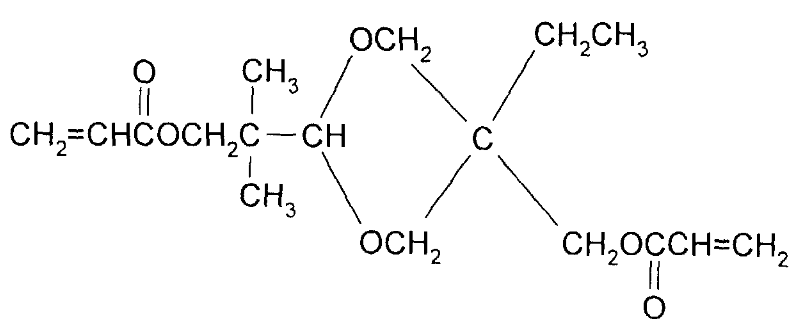

2

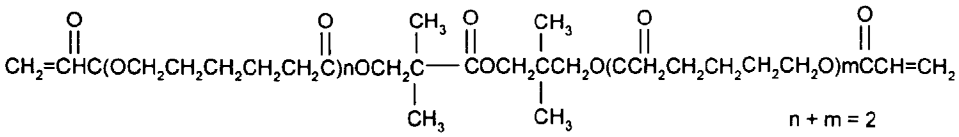

3

n + m = 2

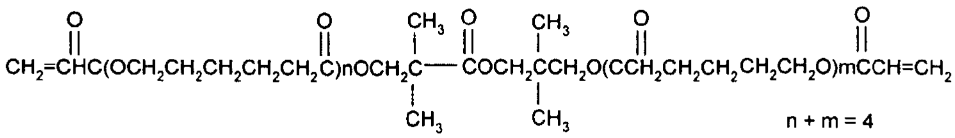

4

n + m = 4

**6.** Electrooptical system according to at least one of claims 3 and 4, characterized in that the precursor of the system comprises one of the following monomers 5 and 6

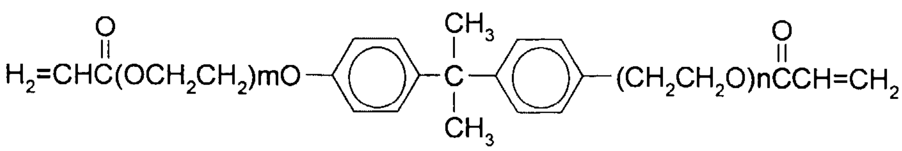

5

n + m = 4

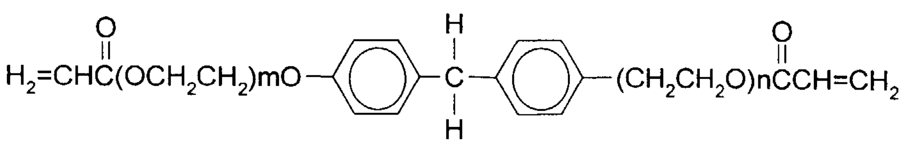

6

n + m = 4

**7.** Electrooptical system according to at least one of claims 3 to 6, characterized in that the precursor of the system comprises one of the following photoinitiators

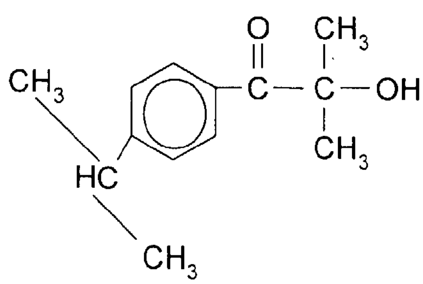

**8.** Mixture for producing an electrooptical system according to one of claims 1-7, containing a liquid crystal mixture containing one or more binuclear compounds of the formula 12 and at one or more trinuclear compounds of the formula 13 and not more than 15% of nitrile compounds and a precursor of the optically transparent polymer medium, in which the absolute value of the difference between the solubility parameter of the precursor and the solubility parameter of the liquid crystal mixture does not exceed 1.5 at room temperature.

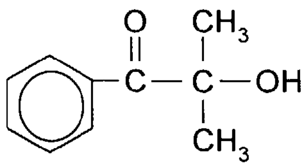

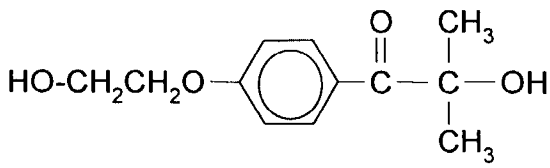

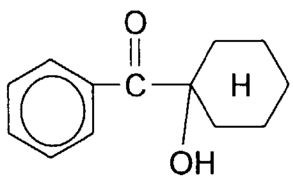

**9.** Mixture according to claim 8, containing a polymerisation initiator, in which the difference between the solubility parameter of the polymerisation initiator and the solubility parameter of the liquid crystal mixture is at least 2.

**10.** Use of a mixture according to claim 9 for producing an electrooptical system according to one of claims 1-7.

**Patentansprüche**

**1.** Elektrooptisches System,

- das zwischen 2 Elektrodenschichten eine Flüssigkristallmischung und ein weiteres optisch transparentes Polymermedium enthält, worin eine der Elektrodenschichten in Form einer aktiven Matrix mit nichtlinearen mit dem Bildpunkt integrierten Adressierelementen vorliegt, während die andere Elektrodenschicht die Gegenelektrode bildet,

- dessen Flüssigkristallmoleküle eine unregelmäßige Orientierung im ausgeschalteten Zustand aufweisen,

- worin einer der Brechungsindizes der Flüssigkristallmischung im wesentlichen dem Brechungsindex $n_m$ des Mediums entspricht und/oder worin der Quotient aus dem Gewicht der Flüssigkristallmischung und dem Gewicht des optisch transparenten Mediums 1,5 oder mehr beträgt,

- worin einer der zwei Schaltzustände unabhängig von der Polarisation des einfallenden Lichts im Vergleich mit dem anderen Zustand verringerte Lichtdurchlässigkeit besitzt,

dadurch gekennzeichnet, daß

- die Flüssigkristallmischung eine oder mehrere Zweiringverbindungen der Formel I2:

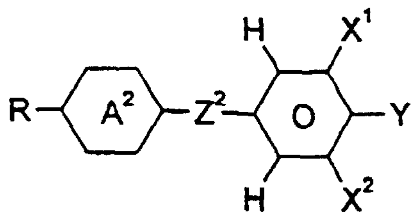

I2

wobei

R Alkyl oder Alkoxy mit 1-10 C-Atomen oder n-Alkoxyalkyl,
$Z^2$ $-CH_2CH_2-$, -COO- oder eine Einfachbindung,
Y -F oder -Cl und

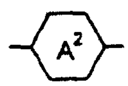

Cyc, Phe.(F), Phe.3F5F, Phe.2F3F, Pyr, Pyd oder Dio bedeuten,

und eine oder mehrere Dreiringverbindungen der Formel I3 enthält

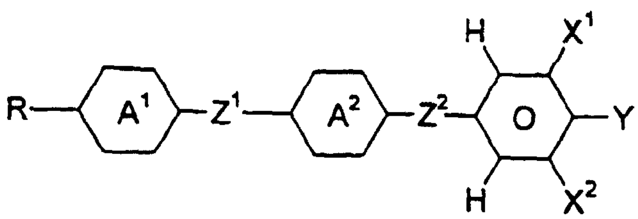

I3

wobei

R n-Alkyl oder n-Alkoxy mit 1-10 C-Atomen, n-Alkoxymethyl oder n-Alkoxyethyl mit 1-8 C-Atomen oder n-Alkenyl mit bis zu 7 C-Atomen,
$Z^1$ und $Z^2$ unabhängig voneinander $-CH_2CH_2-$,-COO- oder eine Einfachbindung,
Y $-OCHF_2$ oder $-OCF_3$,

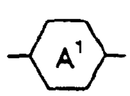 und 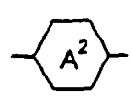

unabhängig voneinander Cyc,
Phe.(F), Phe.2F3F, Phe.3F5F, Phe.2F3F5F, Pyr, Pyd oder Dio bedeuten,

- daß die Flüssigkristallmischung höchstens 15% Nitrilverbindungen enthält,

- daß die in dem optisch transparenten Polymermedium die Vorstufe bildenden Monomere, Oligomere und/oder Präpolymere so ausgewählt werden, daß die Differenz zwischen dem Löslichkeitsparameter der Vorstufe und dem Löslichkeitsparameter der Flüssigkristallmischung dem Betrage nach bei Raumtemperatur 1,5 nicht überschreitet,

mit der Maßgabe, daß die Vorstufe des optisch transparenten Polymermediums nicht durch kationische Fotopolymerisation polymerisiert wird.

2. Elektrooptisches System nach Anspruch 1, dadurch gekennzeichnet, daß die Differenz zwischen dem Löslichkeitsparameter der Vorstufe und dem Löslichkeitsparameter der Flüssigkristallmischung dem Betrage nach 1,0 nicht überschreitet.

3. Elektrooptisches System nach mindestens einem der Ansprüche 1 und 2, dadurch gekennzeichnet, daß die Flüssigkristallmischung folgende Verbindungen enthält:

$$H_{11}C_5\text{-Cyc-Phe-F},$$

$$H_{13}C_6\text{-Cyc-Phe-F},$$

$$H_{15}C_7\text{-Cyc-Phe-F},$$

$$H_7C_3\text{-Cyc-Phe.2F-Phe-Cyc-}C_3H_7,$$

$$H_{11}C_5\text{-Cyc-Phe.2F-Phe-Cyc-}C_3H_7,$$

$$H_{11}C_5\text{-Cyc-Phe.2F-Phe-Cyc-}C_5H_{11},$$

$$H_7C_3\text{-Cyc-Cyc-Phe-}OCF_3,$$

$$H_{11}C_5\text{-Cyc-Cyc-Phe-}OCF_3,$$

$$H_7C_3\text{-Cyc-Cyc-}CH_2CH_2\text{-Phe.3F-F},$$

$$H_7C_3\text{-Cyc-Cyc-}CH_2CH_2\text{-Phe-}OCF_3$$

und

$$H_{11}C_5\text{-Cyc-Cyc-}CH_2CH_2\text{-Phe-}OCF_3.$$

4. Elektrooptisches System nach Anspruch 3, dadurch gekennzeichnet, daß die Flüssigkristallmischung die Verbindungen in den in der nachstehenden Tabelle angegebenen Gewichtsanteilen enthält:

| Verbindung | Gewichtsanteil (%) |
|---|---|
| $H_{11}C_5$-Cyc-Phe-F | 12,0 |
| $H_{13}C_6$-Cyc-Phe-F | 10,0 |
| $H_{15}C_7$-Cyc-Phe-F | 10,0 |
| $H_7C_3$-Cyc-Phe.2F-Phe-Cyc-$C_3H_7$ | 3,0 |
| $H_{11}C_5$-Cyc-Phe.2F-Phe-Cyc-$C_3H_7$ | 4,0 |

(fortgesetzt)

| Verbindung | Gewichtsanteil (%) |
|---|---|
| $H_{11}C_5$-Cyc-Phe.2F-Phe-Cyc-$C_5H_{11}$ | 3,0 |
| $H_7C_3$-Cyc-Cyc-Phe-$OCF_3$ | 13,0 |
| $H_{11}C_5$-Cyc-Cyc-Phe-$OCF_3$ | 12,0 |
| $H_7C_3$-Cyc-Cyc-$CH_2CH_2$-Phe.3F-F | 13,0 |
| $H_7C_3$-Cyc-Cyc-$CH_2CH_2$-Phe-$OCF_3$ | 11,0 |
| $H_{11}C_5$-Cyc-Cyc-$CH_2CH_2$-Phe-$OCF_3$ | 8,0 |

**5.** Elektrooptisches System nach mindestens einem der Ansprüche 3 und 4, dadurch gekennzeichnet, daß die Vorstufe des Systems eines der folgenden Monomere 1 bis 4 enthält:

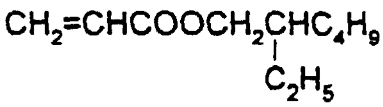

1

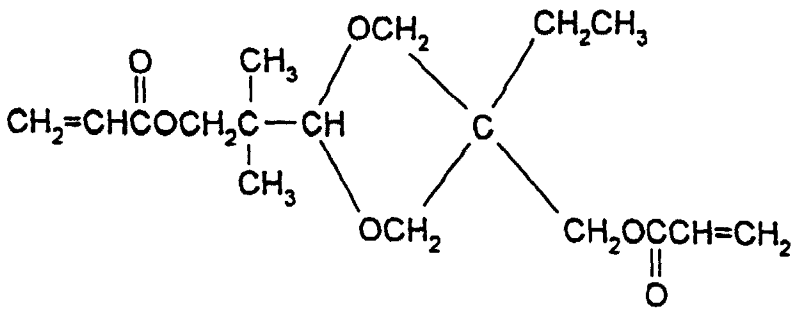

2

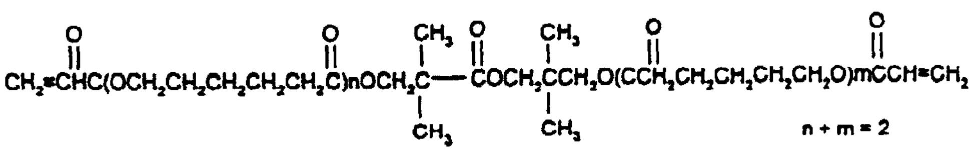

n + m = 2

3

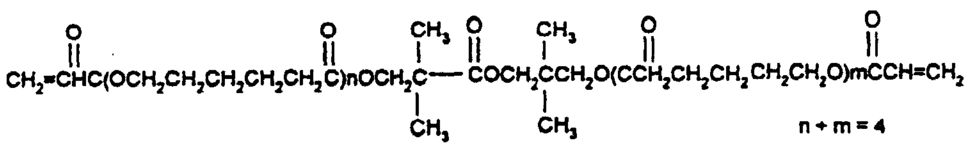

n + m = 4

4

**6.** Elektrooptisches System nach mindestens einem der Ansprüche 3 und 4, dadurch gekennzeichnet, daß die Vorstufe des Systems eines der folgenden Monomere 5 und 6 enthält:

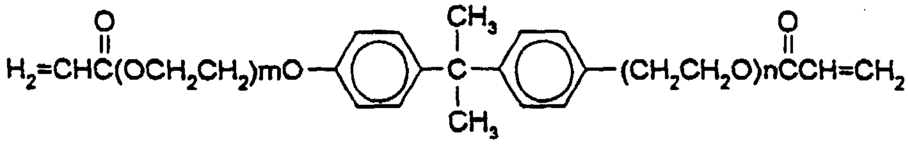

5

n + m = 4

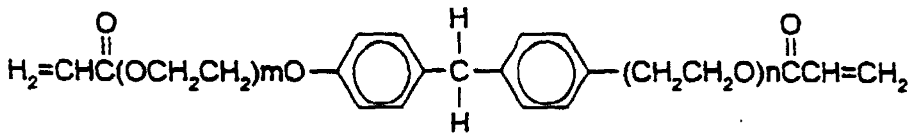

6

n + m = 4

7. Elektrooptisches System nach mindestens einem der Ansprüche 3 bis 6, dadurch gekennzeichnet, daß die Vorstufe des Systems einen der folgenden Fotoinitiatoren enthält:

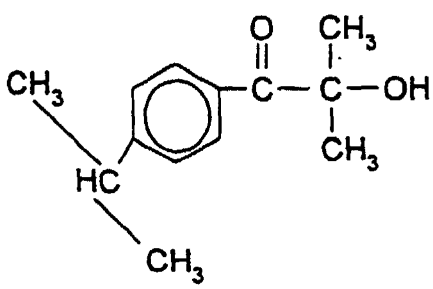

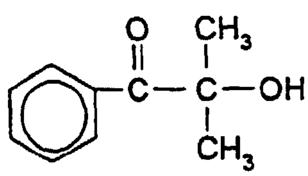

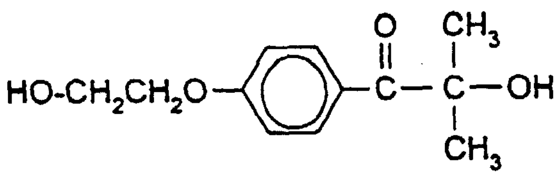

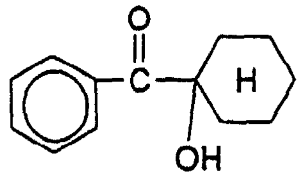

**8.** Mischung zur Herstellung eines elektrooptischen Systems nach einem der Ansprüche 1-7, enthaltend eine Flüssigkristallmischung mit einer oder mehreren Zweiringverbindungen der Formel I2 und einer oder mehreren Dreiringverbindungen der Formel I3 und höchstens 15% Nitrilverbindungen sowie einer Vorstufe des optisch transparenten Polymermediums, worin die Differenz zwischen dem Löslichkeitsparameter der Vorstufe und dem Löslichkeitsparameter der Flüssigkristallmischung dem Betrage nach 1,5 bei Raumtemperatur nicht überschreitet.

**9.** Mischung nach Anspruch 8, enthaltend einen Polymerisationsinitiator, worin die Differenz zwischen dem Löslichkeitsparameter des Polymerisationsinitiators und dem Löslichkeitsparameter der Flüssigkristallmischung mindestens 2 beträgt.

**10.** Verwendung einer Mischung nach Anspruch 9 zur Herstellung eines elektrooptischen Systems nach einem der Ansprüche 1-7.

## Revendications

**1.** Système électro-optique

- qui, entre 2 couches d'électrodes, contient un mélange de cristaux liquides et un autre milieu polymère présentant une transparence optique, dans lequel une des couches d'électrodes est sous la forme d'une matrice active possédant des éléments d'adresse non linéaires intégrés avec le point d'image, tandis que l'autre couche d'électrode forme la contre-électrode,
- dont les molécules à cristaux liquides ont une orientation irrégulière dans l'état bloqué,
- dans lequel un des indices de réfraction du mélange de cristaux liquide est essentiellement le même que l'indice de réfraction du milieu $n_m$ et/ou dans lequel le quotient entre le poids du mélange de cristaux liquides et le poids du milieu présentant une transparence optique est de 1,5 ou plus,
- qui, dans l'un des deux états de commutation, présente une transmission réduite comparée à l'autre état indépendamment de la polarisation de la lumière incidente,

caractérisé en ce que

- le mélange de cristaux liquides contient un ou plusieurs composés binucléaires de formule I2:

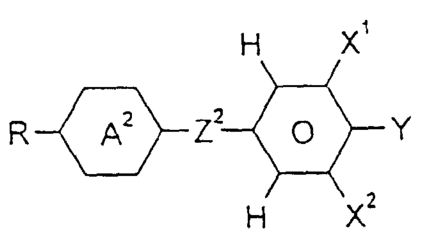

I2

dans laquelle

R est un groupe alkyle ou alcoxy comportant 1-10 atomes de C, ou un groupe n-alcoxyalkyle,
$Z^2$ est $-CH_2CH_2-$, -COO- ou une simple liaison,
Y est -F ou -Cl, et

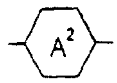

est Cyc, Phe.(F), Phe.3F5F, Phe.2F3F, Pyr, Pyd ou Dio et contient un ou plusieurs composés trinucléaires de formule I3 :

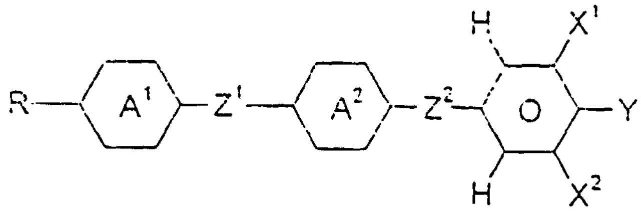

I3

dans laquelle

R est un groupe n-alkyle ou n-alcoxy comportant 1-10 atomes de C, un groupe n-alcoxyméthyle ou n-alcoxyéthyle comportant 1-8 atomes de C ou un groupe n-alcényle comportant jusqu'à 7 atomes de C,
$Z^1$ et $Z^2$, indépendamment l'un de l'autre, sont $-CH_2CH_2-$, -COO- ou une simple liaison,
Y est $-OCHF_2$ ou $-OCF_3$,

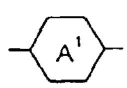 et 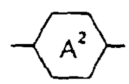

sont, indépendamment l'un de l'autre, Cyc, Phe.(F), Phe.2F3F, Phe.3F5F, Phe.2F3F5F, Pyr, Pyd et Dio,

- en ce que le mélange de cristaux liquides contient au plus 15% composés nitrile, et
- en ce que les monomères, oligomères et/ou prépolymères formant le précurseur du milieu polymère présentant une transparence optique sont choisis de manière que la valeur absolue de la différence entre le paramètre de solubilité du précurseur et le paramètre de solubilité du mélange de cristaux liquides ne dépasse pas 1,5 à la température ambiante

à la condition que le précurseur du milieu polymère présentant une transparence optique ne soit pas polymérisé par photopolymérisation cationique.

**2.** Système électro-optique selon la revendication 1, caractérisé en ce que la valeur absolue de la différence entre le paramètre de solubilité du précurseur et le paramètre de solubilité du mélange de cristaux liquides ne dépasse pas 1,0.

**3.** Système électro-optique selon l'une au moins des revendications 1 et 2, caractérisé en ce que le mélange de cristaux liquides contient les composés suivants:

$H_{11}C_5$-Cyc-Phe-F,

$H_{13}C_6$-Cyc-Phe-F,

$H_{15}$-$C_7$-Phe-F,

$H_7C_3$-Cyc-Phe-F.2F-Phe-Cyc-$C_3H_7$,

$H_{11}C_5$-Cyc-Phe-F.2F-Phe-Cyc-$C_3H_7$,

$H_{11}C_5$-Cyc-Phe-F.2F-Phe-Cyc-$C_5H_{11}$,

$H_7C_3$-Cyc-Cyc-Phe-$OCF_3$,

$H_{11}C_5$-Cyc-Cyc-Phe-$OCF_3$,

$H_7C_3$-Cyc-Cyc-$CH_2$-$CH_2$-Phe.3F-F,

$H_7C_3$-Cyc-Cyc-$CH_2$-$CH_2$-Phe-$OCF_3$,

et

$H_{11}C_5$-Cyc-Cyc-$CH_2$-$CH_2$-Phe-$OCF_3$.

**4.** Système électro-optique selon la revendication 3, caractérisé en ce que le mélange de cristaux liquides contient les composés dans les proportions pondérales indiquées dans le tableau suivant

| Composé | Proportion pondérale (%) |
|---|---|
| $H_{11}C_5$-Cyc-Phe-F | 12,0 |
| $H_{13}C_6$-Cyc-Phe-F | 10,0 |
| $H_{15}$-$C_7$-Phe-F | 10,0 |
| $H_7C_3$-Cyc-Phe-F.2F-Phe-Cyc-$C_3H_7$ | 3,0 |
| $H_{11}C_5$-Cyc-Phe-F.2F-Phe-Cyc-$C_3H_7$ | 4,0 |
| $H_{11}C_5$-Cyc-Phe-F.2F-Phe-Cyc-$C_5H_{11}$ | 3,0 |
| $H_7C_3$-Cyc-Cyc-Phe-$OCF_3$ | 13,0 |
| $H_{11}C_5$-Cyc-Cyc-Phe-$OCF_3$ | 12,0 |
| $H_7C_3$-Cyc-Cyc-$CH_2$-$CH_2$-Phe.3F-F | 13,0 |
| $H_7C_3$-Cyc-Cyc-$CH_2$-$CH_2$-Phe-$OCF_3$ | 1 1,0 |
| $H_{11}C_5$-Cyc-Cyc-$CH_2$-$CH_2$-Phe-$OCF_3$ | 8,0 |

**5.** Système électro-optique selon l'une au moins des revendications 3 et 4, caractérisé en ce que le précurseur du système comprend un des monomères 1 à 4 suivants:

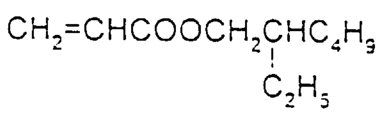

1

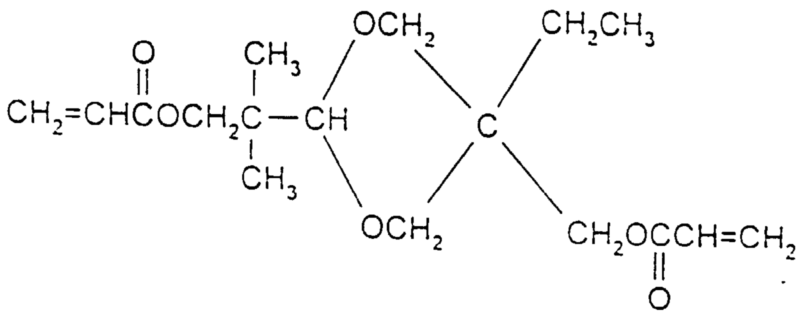

2

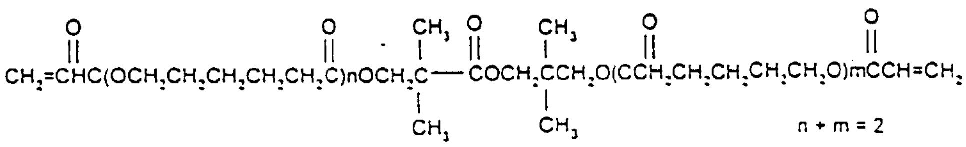

3

n + m = 2

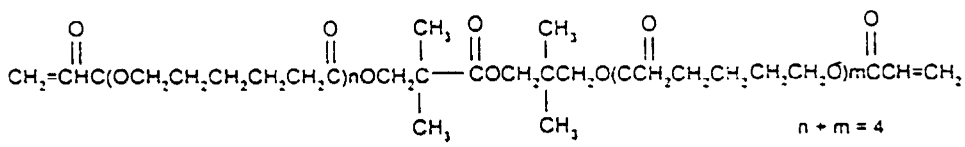

4

n + m = 4

**6.** Système électro-optique selon l'une au moins des revendications 3 et 4, caractérisé en ce que le précurseur du système comprend un des monomères 5 et 6 suivants:

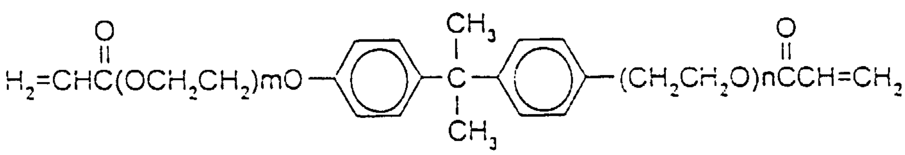

5

n + m = 4

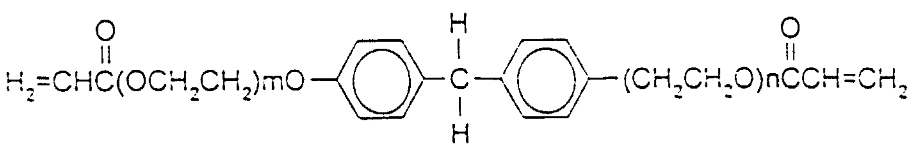

6

n + m = 4

**7.** Système électro-optique selon l'une au moins des revendications 3 à 6, caractérisé en ce que le précurseur du système comprend l'un des photoamorceurs suivants:

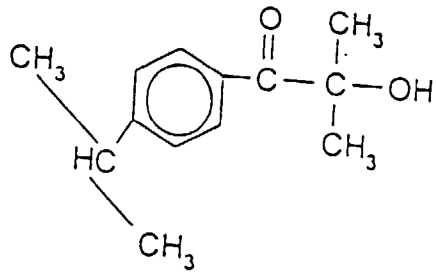

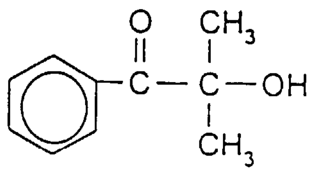

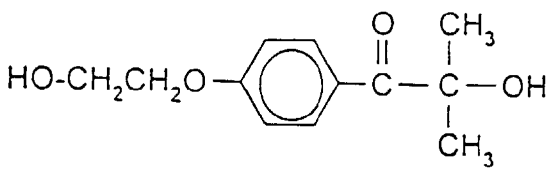

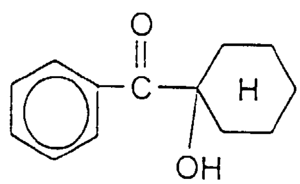

**8.** Mélange pour produire un système électro-optique selon l'une des revendications 1 à 7, contenant un mélange de cristaux liquides contenant un ou plusieurs composés binucléaires de formule I2 et un ou plusieurs composés trinucléaires de formule I3 et pas plus de 15% de composés nitrile et un précurseur du milieu polymère présentant une transparence optique, dans lequel la valeur absolue de la différence entre le paramètre de solubilité du précurseur et le paramètre de solubilité du mélange de cristaux liquides ne dépasse pas 1,5 à la température ambiante.

**9.** Mélange selon la revendication 8, contenant un amorceur de polymérisation, dans lequel la différence entre le paramètre de solubilité de l'amorceur de polymérisation et le paramètre de solubilité du mélange de cristaux liquides est d'au moins 2.

**10.** Utilisation selon la revendication 9 pour produire un système électro-optique selon l'une quelconque des revendications 1 à 7.

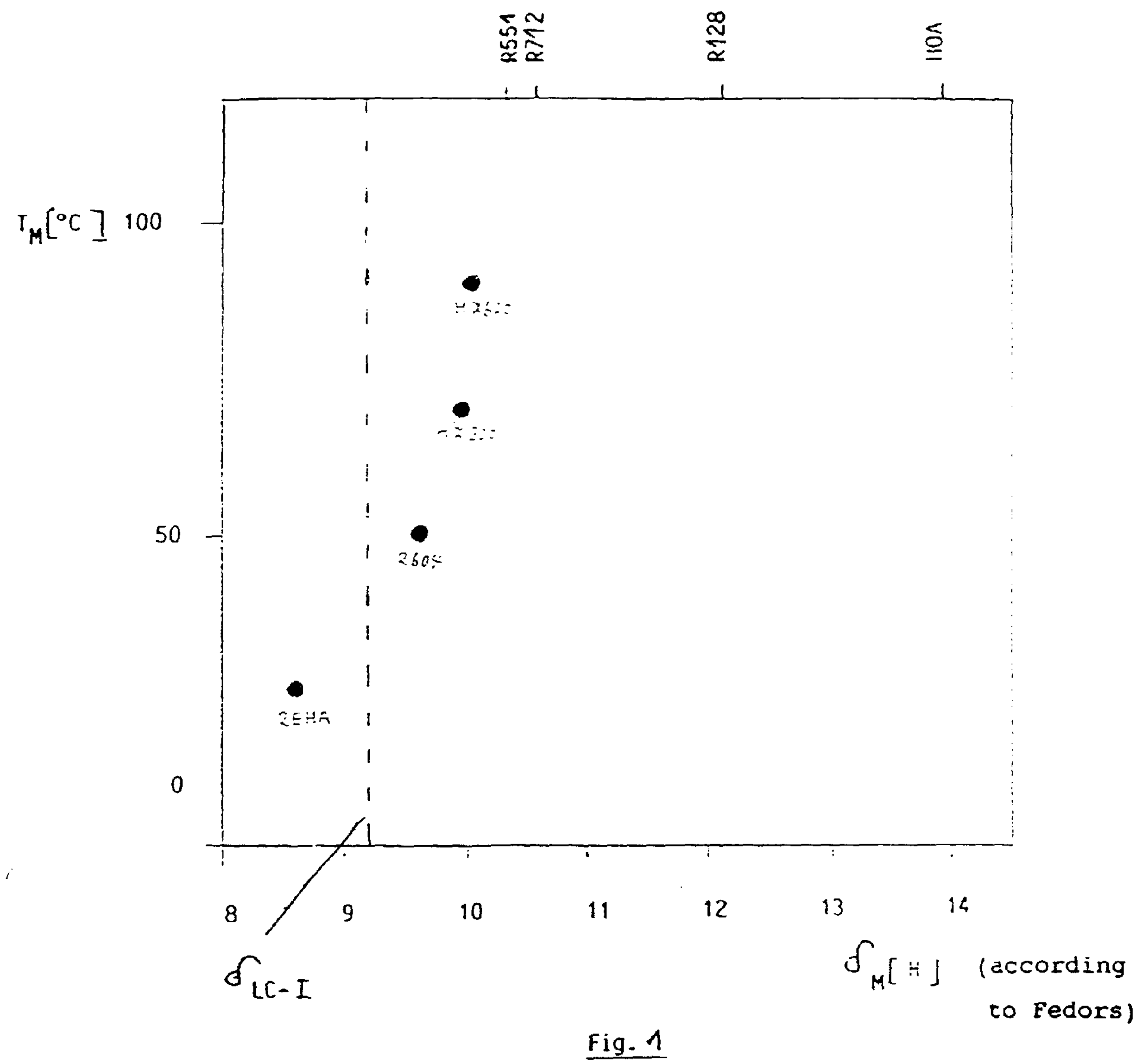
R551
R712
R128
110A
T_M[°C]
100
50
0
2EHA
8
9
10
11
12
13
14
δ_LC-I
δ_M[H] (according to Fedors)

Fig. 1

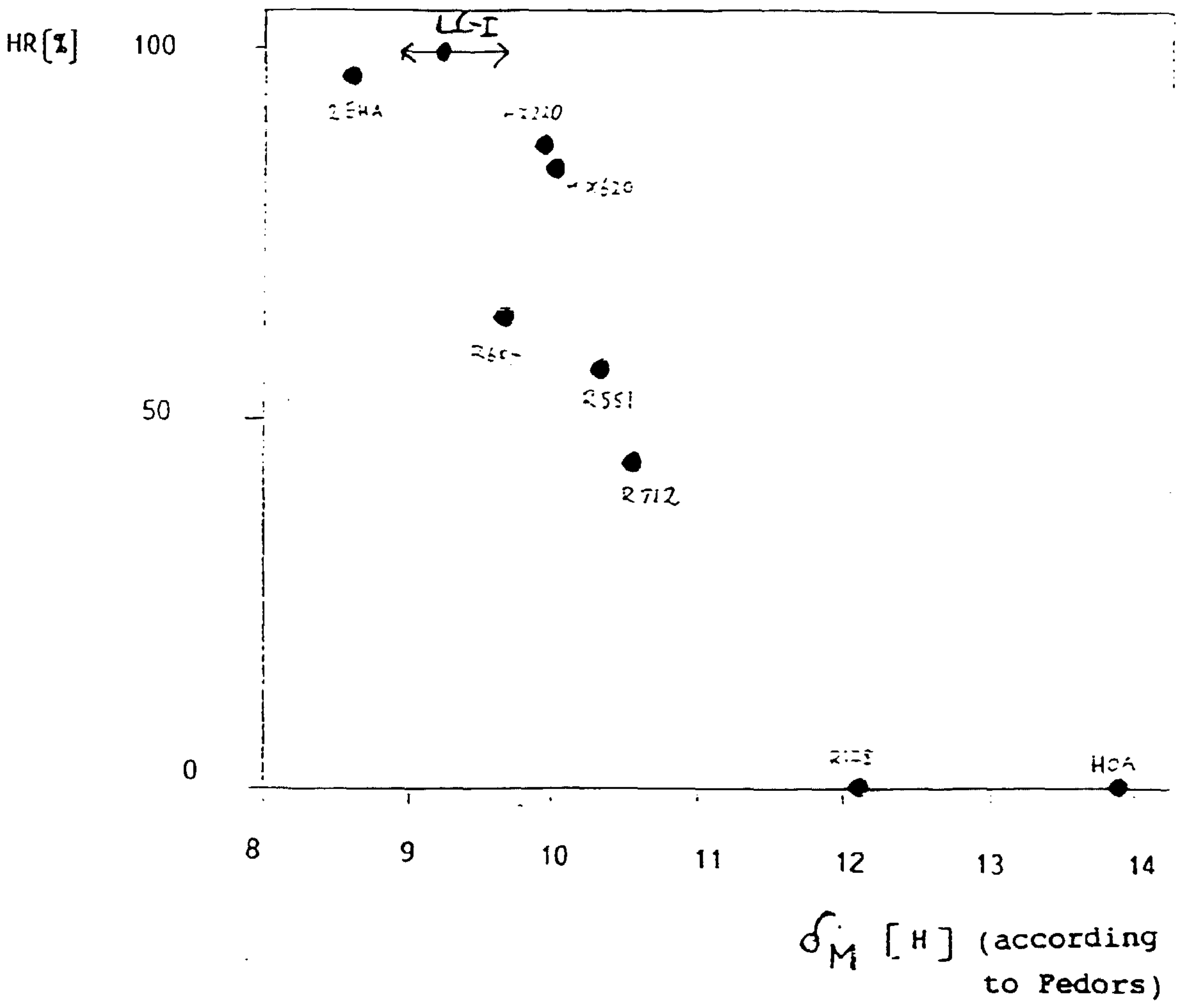
HR[%]
100
50
0
LG-I
2EHA
R712
HOA
8
9
10
11
12
13
14
δM [H] (according to Pedors)

Fig. 2